# EUROPEAN PATENT APPLICATION

(11) **EP 2 353 375 A1**
(43) Date of publication of application: **10.08.2011**
(21) Application number: 11153277.6
(22) Date of filing: 04.02.2011
(51) Int. Cl.: A01K 1/01

(54) **Hygienic lining with handles for pet litter trays**

(30) Priority: 08.02.2010 IT CR20100005
(71) Applicant: A & B SAS di Federici Andrea & C., 26048 Sospiro (CR) (IT)
(72) Inventor: Federici, Andrea, 26100 Cremona (IT)
(74) Representative: Marcio', Paola

(57) **Abstract**

Hygienic lining (1) with handles for pet litter trays, arranged for coating a specific tray (2) arranged for containing granular material, comprising a plastic film (3) substantially rectangular in shape, folded over itself along a median line parallel to its longer sides and fixed by means of transverse welds (4) along its shorter sides so as to obtain a bag and two tubular structures (5) arranged along the longer sides of said film (3) and produced by turning over and longitudinal welding (6) of the film along said sides, each one arranged for containing a tape (7) fixed to the ends by means of said transverse weld (4) and accessible to the user by means of a slot (8) produced in said tubular structures (5), wherein said plastic film (3) is furtherly folded longitudinally towards the inside of the bag, so as to obtain a bellows bottom structure (9), held laterally by means of said transverse welds (4).

## Description

The invention relates to the sector of accessories for the care and cleanliness of pets.

More in detail, the invention relates to a hygienic lining provided with handles arranged for internally lining a tray arranged for containing absorbent granular material used as litter to contain the excrements of small pets, in particular cats and rodents.

There are already known hygienic linings arranged for coating pet litter containers, constituted by a polyolefin plastic film substantially rectangular in shape, folded over itself along a median line parallel to its longer sides and closed by means of transverse welds along its shorter sides so as to substantially obtain a bag, arranged for containing the litter.

Said hygienic linings facilitate not only positioning and holding the litter in specific collection trays, changing and replacing the used litter but also transporting the litter to the refuse disposal point, thanks to specific handles provided on said linings to make this operation more hygienic.

In particular, hygienic linings of known type comprise two tubular structures arranged along the longer sides of said film and produced by turning over towards the inside and longitudinal welding of these sides, each one arranged for containing a polyolefin tape fixed to the ends by means of said transverse weld and accessible to the user by means of a central slot produced in said tubular structures.

In the packages available on the market, said linings are then arranged in succession one after another, to create a strip of indefinite length, wherein the single linings are separated by pre-cut lines. Said strip is then wound around itself to form a roll ready to make available the single linings.

The aforesaid hygienic linings have some limits or disadvantages.

The transverse weld lines are at times very long, involving the whole extension of the shorter sides of the plastic film: disadvantageously during use, a portion of this long weld is arranged horizontally in the collection tray with the risk of percolation and spillage of liquid in the weakest points of the joint subject to breakage.

The transverse weld lines are also very thin as they involve only two single layers of the plastic film with which the linings are produced, typically with thickness comprised between 20 and 40 µm: disadvantageously the weld is not very sturdy, with the risk of breakage thereof, for example due to the weight force exerted by the damp litter on the lining during its handling.

When conventional hygienic linings are placed adjacent to produce a strip, they are also somewhat impractical in the rolling step. The roll that is created substantially does not have a cylindrical shape, but the ends have very different diameters: the end involved by the tubular strips containing the tape to be used as handle is produced with superimposition of a total of eight layers of plastic material, while the opposite end is produced with superimposition of only two layers of material.

Disadvantageously, the roll that is obtained is therefore not cylindrical and well proportioned from a dimensional viewpoint, but creates considerable packaging problems.

Moreover, these rolls that are not well proportioned are not very practical, do not optimize the weight/volume ratio and create difficulties for the management of space for their storage, transport and display on the shelves of the points of sale.

To obtain a cylindrical roll in which the ends have substantially the same diameter it is necessary to fold the portion of strip not involved by the tubular structures of the handles at least twice over itself before the rolling step: disadvantageously, however, the roll that is obtained in this manner is very squat and consequently not easy to handle.

The invention aims to overcome these limits and disadvantages.

The aim of the present invention is to produce hygienic linings with weld lines and joins that are perfectly liquid tight and suitably sturdy to withstand the weight of the damp litter during transport and handling thereof.

Another aim of the invention is to produce linings that are easy to insert and adapt to trays of different dimensions, without the weld lines being arranged along the bottom of the container and without these, or the plastic film, being stressed and deformed excessively during use.

Another aim of the invention is to facilitate sliding of the tapes in the relative tubular structure and to facilitate holding and balanced transport of the linings full of used granular material.

A further aim of the invention is to produce linings that can be associated in a strip that can be correctly folded and rolled up over itself to form a perfectly cylindrical roll, to optimize the weight/volume ratio of said roll and limit the space required for storage, transport and display thereof on retailers' shelves.

The objects are achieved with a hygienic lining with handles for pet litter trays, arranged for coating a specific tray arranged for containing granular material, comprising:
- a plastic film substantially rectangular in shape, folded over itself along a median line parallel to its longer sides and fixed by means of transverse welds along its shorter sides so as to obtain a bag;
- two tubular structures arranged along the longer sides of said film and produced by turning over and longitudinal welding of the film along said sides, each one arranged for containing a tape fixed to the ends by means of said transverse weld and accessible to the user by means of a slot produced in said tubular structures,
characterized in that said plastic film is furtherly folded longitudinally towards the inside of the bag, so as to obtain a bellows bottom structure, held laterally by means of said transverse welds.

According to a preferred aspect of the invention, said bellows bottom structure is inserted towards the inside of the bag substantially up to said longitudinal welds.

According to a further aspect of the invention, the turning over of the film along the longer sides is produced from the inside towards the outside of the lining.

According to an even more preferred aspect of the invention, each one of said tubular structures comprises a plurality of slots.

According to a further preferred aspect of the invention, said lining can be arranged in sequence with other linings of identical shape, for producing a strip of indefinite length provided with pre-cut lines advantageously arranged along the centre line of said transverse welds.

According to a further even more preferred aspect of the invention, said lining is folded longitudinally to create a flap having a height substantially equal to the height of said tubular structures and said strip is rolled up to form a cylindrical roll whose end portions have substantially the same diameter.

The invention has numerous advantages.

The transverse weld lines are short and during use remain in vertical position inside the collection tray: in this manner there is no danger of percolation or spillage of liquids.

The transverse weld lines are also particularly sturdy, involving four layers of plastic material, i.e. the two layers produced by means of the film folded over itself to form a bag and the two layers that produce the bellows bottom structure. Advantageously, said welds with four layers are more resistant above all to the weight force of the damp litter during handling and transport thereof.

Moreover, the bellows bottom structure advantageously adapts to any shape and dimension of the collection containers and makes positioning of the linings extremely easy.

The turning over towards the outside of the film along the longer sides, produced from the inside towards the outside of the lining, allows the user to see the presence of an optional layer of coextruded material of different colour that is proof of the improved quality of the lining.

The presence of a plurality of slots for holding the tapes increases the hygiene of the operation to replace the linings, facilitates sliding of the tapes in the tubular structures and allows the weight of the bag to be divided in a more balanced manner during transport.

The strip composed of hygienic linings adjacent to one another, folded simply once over itself creates a new strip of more or less homogeneous thickness along the edges and facilitates rolling up thereof, creating a roll of cylindrical form whose ends have substantially the same diameter.

The roll obtained from the folded and rolled up strip is therefore practical, easy to handle and optimizes its weight/volume ratio with considerable advantages for packaging, but also for transport and storage.

The advantages of the invention will be more evident below, from the description of a preferred embodiment, provided by way of non-limiting example, and with the aid of the figures, wherein:
Fig. 1 represents, in cross section, a hygienic lining for litter with handles according to the invention;
Fig. 2 represents, in a perspective view, the portion of hygienic lining of Fig. 1;
Fig. 3 represents, in a front view, the hygienic lining with handles according to the invention, wherein the proportions are altered for clarity of representation;
Fig. 4 represents, in a top view, a outstretched portion of a strip of linings according to a variant of the invention;
Fig. 5 represents, in a perspective view, a strip of hygienic linings folded and partially rolled up over itself;
Fig. 6 represents, in a perspective view, a tray arranged for containing a granular litter material, coated by a hygienic lining according to the invention;
Fig. 7 represents, in a perspective view, a hygienic lining during transport for replacement of the litter.

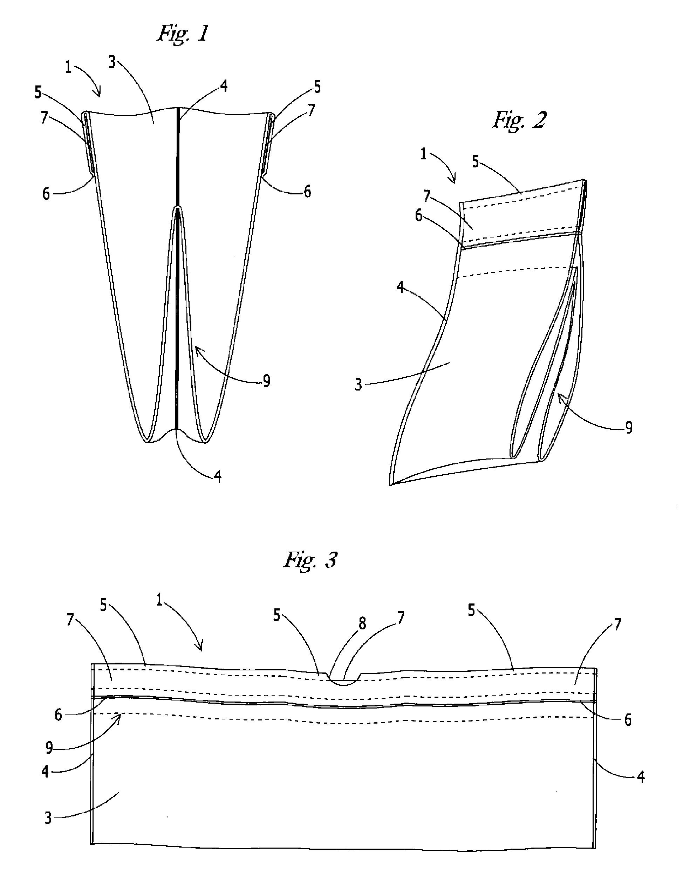

With reference to Figs. 1-3, there is illustrated a hygienic lining 1 for litter with handles.

Said lining 1 is produced by means of a plastic film 3 substantially rectangular in shape, folded over itself along a median line parallel to its longer sides.

Said plastic film 3 is then fixed by means of transverse welds 4 along its shorter sides so as to obtain a bag arranged for containing the granular material of the litter.

Said plastic film 3 also comprises two tubular structures 5 arranged along the longer sides thereof.

Said tubular structures 5 are produced by folding, turning over towards the outside and longitudinal welding 6 of the longer sides of the plastic film 3 and are arranged each one for containing a tape 7.

Said tape 7 slides inside said tubular structures 5, but is fixed to the ends by means of the transverse welds 4 of the shorter sides of the plastic film 3.

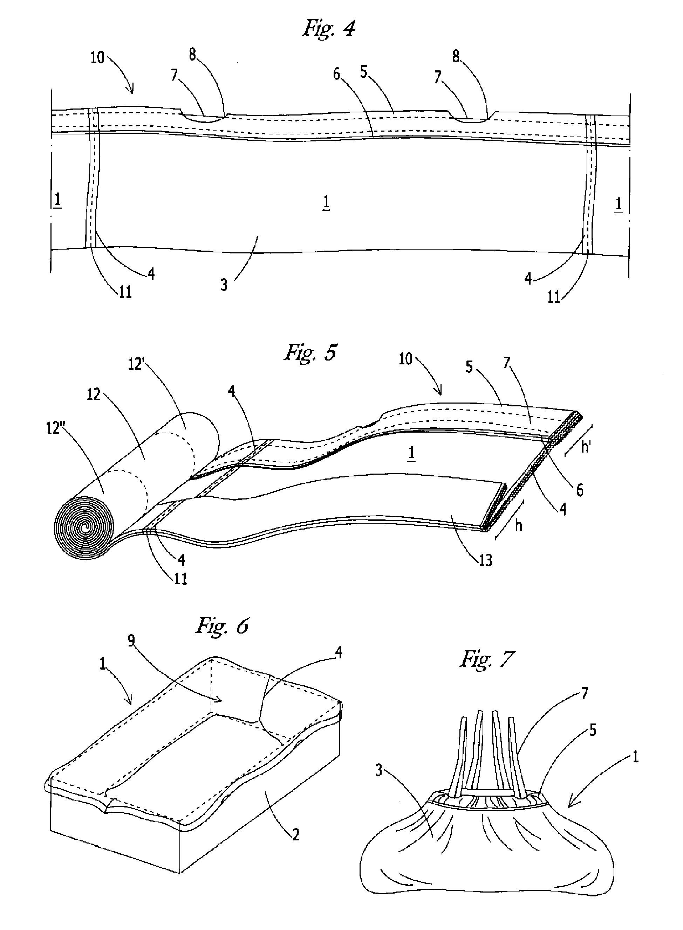

Said tape 7, arranged for acting as handle for said lining 1, is accessible to the user by means of at least a slot 8 produced centrally in said tubular structures 5. In a variant illustrated in Fig. 4 said tubular structures each have a plurality of slots 8.

Said plastic film 3 is furtherly folded longitudinally towards the inside of said bag, so as to obtain a bellows bottom structure 9.

Said bellows bottom structure 9 is inserted towards the inside of the bag substantially up to the line of the longitudinal welds 6 of the tubular structure 5, and it too is held laterally by means of the transverse welds 4 of the shorter sides of the plastic film 3.

With reference to Fig. 4, there is illustrated a strip 10 of indefinite length constituted by a sequence of linings 1 of the same shape.

Along said strip 10 there are arranged, at regular intervals, transverse tear or pre-cut lines 11, produced according to prior art, to allow separation of the strip 10 into single hygienic linings 1.

Said pre-cut lines 11 are arranged along the centre line of said transverse welds 4.

With reference to Fig. 5, there is shown a roll 12, partially unwound, constituted by a strip 10, where it is evident that each single lining 1 is obtainable by the tearing of said strip 10 along the transverse pre-cut lines 11.

Said strip 10 is folded according to a longitudinal fold line to create a flap 13 having a height h substantially equal to the height h' of the tubular structures 5.

Said folded portion of the strip has a thickness so as to be substantially equal to that of the tubular structures 5 arranged for containing said tape 7, so that the roll 12 can maintain a substantially cylindrical shape, as illustrated in particular in Fig. 5, where it is evident that the ends 12', 12" of said roll 12 have the same diameter.

With reference to Fig. 6 there is illustrated a tray 2, arranged for containing granular material of the litter type, coated by means of a hygienic lining 1 produced according to the invention.

It is particularly evident how the bellows bottom structure 9 makes the hygienic lining 1 conform perfectly to said tray 2 achieving all the aforesaid advantages.

The material used for producing said lining 1 is of known type and belonging to the polyolefin family, for example virgin or regenerated PELD, PEHD, PELLD, PEMLLD, PP, PET, etc.

The material used for producing said tapes 7 is of known type and belonging to the polyolefin family, for example virgin or regenerated PEHD.

Naturally, the constructional details, the dimensions, the materials and the embodiments can be vary widely with respect to those described and illustrated, without however departing from the scope of the present invention, as described, illustrated and claimed.

## Claims

1. Hygienic lining (1) with handles for pet litter trays, arranged for coating a specific tray (2) arranged for containing granular material, comprising:
- a plastic film (3) substantially rectangular in shape, folded over itself along a median line parallel to its longer sides and fixed by means of transverse welds (4) along its shorter sides so as to obtain a bag;
- two tubular structures (5) arranged along the longer sides of said film (3) and produced by turning over and longitudinal welding (6) of the film along said sides, each one arranged for containing a tape (7) fixed to the ends by means of said transverse weld (4) and accessible to the user by means of a slot (8) produced in said tubular structures (5),
**characterized in that** said plastic film (3) is furtherly folded longitudinally towards the inside of the bag, so as to obtain a bellows bottom structure (9), held laterally by means of said transverse welds (4).

2. Hygienic lining (1) according to claim 1, **characterized in that** said bellows bottom structure (9) is inserted towards the inside of the bag substantially up to said longitudinal welds (6).

3. Hygienic lining (1) according to claim 1, **characterized in that** the turning over of the film along the longer sides is produced from the inside towards the outside of the lining.

4. Hygienic lining (1) according to claim 1, **characterized in that** each one of said tubular structures (5) comprises a plurality of slots (8).

5. Hygienic lining (1) according to claim 1, **characterized in that** it is arranged in sequence with other linings (1) of identical shape, for producing a strip (10) of indefinite length provided with pre-cut lines (11).

6. Hygienic lining (1) according to claim 5, **characterized in that** said pre-cut lines (11) are arranged along the centre line of said transverse welds (4).

7. Hygienic lining (1) according to claim 5, **characterized in that** it is folded to create a flap (13) having a height (h) substantially equal to the height (h') of said tubular structures (5) and said strip (10) is rolled up to form a cylindrical roll (12) whose end portions (12', 12") have substantially the same diameter.
